# EUROPÄISCHE PATENTSCHRIFT

(11) **EP 3 621 487 B1**
(45) Veröffentlichungstag und Bekanntmachung des Hinweises auf die Patenterteilung: **30.06.2021**
(21) Anmeldenummer: 18722544.6
(22) Anmeldetag: 07.05.2018
(51) Int. Cl.: A47C 1/026

(54) **SCHWENKBESCHLAG UND MÖBEL**
PIVOT FITTING AND PIECE OF FURNITURE
FERRURE PIVOTANTE ET MEUBLE

(30) Priorität: 11.05.2017 DE 102017110249
(43) Veröffentlichungstag der Anmeldung: 18.03.2020
(73) Patentinhaber: Hettich Franke GmbH & Co. KG, 72336 Balingen-Weilstetten (DE)
(72) Erfinder: NILL, Oliver, 72379 Hechingen (DE)
(74) Vertreter: Dantz, Jan Henning
(86) Internationale Anmeldenummer: PCT/EP2018/061681
(87) Internationale Veröffentlichungsnummer: WO 2018/206485

(56) Entgegenhaltungen:
- EP-A1- 2 389 839
- JP-A- 2008 259 613

## Beschreibung

Die vorliegende Erfindung betrifft einen Schwenkbeschlag, insbesondere für bewegliche Möbelteile an Möbeln gemäß dem Oberbegriff des Anspruchs 1 sowie ein Möbel.

Solche Schwenkbeschläge, beispielsweise bekannt aus der EP 2 389 839 A1, dienen beispielsweise der Verschwenkung von Rückenlehnen, Kopfstützen oder Armlehnen eines Sitz- oder Liegemöbels relativ zum Möbelkorpus des Möbels. Der Schwenkbeschlag ist dabei mit einem ersten Hebel am Möbelkorpus festgelegt. Ein zweiter Hebel des Schwenkbeschlags ist mit der Kopfstütze oder der Armlehne verbunden. Mithilfe dieses Schwenkbeschlags lässt sich die Rückenlehne, Kopfstütze oder die Armlehne in verschiedenen Winkelstellungen relativ zum Möbelkorpus verstellen.

Derartige Schwenkbeschläge haben sich in der Praxis an sich bewährt. Nachteilig ist, dass bei der Verstellung des beweglichen Möbelteils in eine maximal mögliche letzte Rastposition diese mit den gattungsgemäßen Schwenkbeschlägen nicht erkennbar ist und dementsprechend beim Verstellen des beweglichen Möbelteils häufig überfahren wird, was dazu führt, dass der Benutzer dabei die Umschaltposition des Schwenkbeschlags erreicht, bei der der Rastmechanismus inaktiv geschaltet wird, so dass der Benutzer den Schwenkbeschlag zurück in die Ausgangsstellung verschwenken muss und anschließend durch Verschwenken in Verstellrichtung erneut versucht, das bewegliche Möbelteil in die letzte mögliche Rastposition zu verstellen.

Aufgabe der vorliegenden Erfindung ist es, einen gattungsgemäßen Schwenkbeschlag sowie ein Möbel dahingehend weiterzuentwickeln, dass eine vorbestimmte Rastposition leichter aufzufinden ist.

Diese Aufgabe wird durch einen Schwenkbeschlag, insbesondere für bewegliche Möbelteile an Möbeln mit den Merkmalen des Anspruchs 1 gelöst.

Die Aufgabe wird des Weiteren durch ein Möbel mit den Merkmalen des Anspruchs 16 gelöst.

Der erfindungsgemäße Schwenkbeschlag weist einen ersten Hebel und einen zweiten Hebel auf, die um eine Schwenkachse aus einer Grundstellung heraus um einen vorbestimmten Winkel schwenkbar zueinander in einer Verstellrichtung und einer Rückstellrichtung gelagert sind.

Der Schwenkbeschlag weist des Weiteren einen Rastmechanismus auf, mit dem die beiden Hebel in unterschiedlichen Winkelstellungen innerhalb des vorbestimmten Winkels relativ zueinander entgegen einer in Rückstellrichtung wirkenden Kraft verrastbar und bei deaktiviertem Rastmechanismus in Rückstellrichtung verschwenkbar sind.

Eine Kraftwelle des Verstellmechanismus ist mit dem zweiten Hebel des Schwenkbeschlags drehfest gekoppelt. Der Rastmechanismus ist dabei durch Verschwenken des zweiten Hebels relativ zum ersten Hebel in Verstellrichtung bei Erreichen einer Umschaltposition deaktivierbar.

Am ersten Hebel des Schwenkbeschlags ist eine Dämpfungsbaueinheit angeordnet, die der Abdämpfung der Schwenkbewegung des zweiten Hebels relativ zum ersten Hebel in Verstellrichtung ab einem vorbestimmten Verstellwinkel dient, wobei die Dämpfungsbaueinheit derart angeordnet ist, dass diese ab dem vorbestimmten Verstellwinkel eine Erhöhung der benötigten Verstellkraft gegenüber einer benötigten Verstellkraft vor Erreichen des vorbestimmten Verstellwinkels bewirkt.

Ein solcher Schwenkbeschlag ermöglicht durch die Anordnung der Dämpfungsbaueinheit, eine vorbestimmte Rastposition des Schwenkbeschlags, insbesondere die letzte Rastposition vor Erreichen der Umschaltposition leichter zu finden. Dies geschieht durch Erhöhung der benötigten Verstellkraft, der ab einem vorbestimmten Verstellwinkel die Dämpfungsbaueinheit entgegenwirkt, so dass für den Benutzer eines solchen Schwenkbeschlags bzw. eines erfindungsgemäßen Möbels mit einem solchen Schwenkbeschlag durch den unterschiedlich benötigten Kraftaufwand bei der Verstellung des Schwenkbeschlags die vorbestimmte Rastposition in einfacher Weise aufzufinden ist und so eine Fehlbetätigung im Sinne eines Überfahrens der vorbestimmten Rastposition zu vermeiden.

Vorteilhafte Ausführungsvarianten der Erfindung sind Gegenstand der Unteransprüche.

Gemäß einer Ausführungsvariante der Erfindung weist die Dämpfungsbaueinheit einen an einem Hebelkopf des ersten Hebels drehfest festgelegten ersten Teller auf, einen auf dem ersten Teller aufliegenden und um die Schwenkachse relativ zum ersten Teller drehbaren zweiten Teller.

Die Dämpfungsbaueinheit weist des Weiteren wenigstens ein zwischen den Tellern angeordnetes und mit beiden Tellern gekoppeltes, einer Drehbewegung des zweiten Tellers relativ zum ersten Teller in Verstellrichtung entgegenwirkendes Dämpfungselement auf sowie einen mit dem zweiten Teller um den vorbestimmten Verstellwinkel relativ zu diesem drehbar und mit der Kraftwelle drehfest gekoppelten Mitnehmer.

Eine solche Dämpfungsbaueinheit zeichnet sich durch ihren einfachen Aufbau aus. Darüber hinaus ist eine solche Dämpfungsbaueinheit in einfacher Weise an Schwenkbeschlägen unterschiedlicher Bauart anbringbar.

Gemäß einer weiteren vorteilhaften Ausführungsvariante ist in den Tellern wenigstens eine Aufnahmetasche zur drehfesten Lagerung des wenigstens einen Dämpfungselements angeformt. Das wenigstens eine Dämpfungselement ist dabei derart gelagert, dass einer Verdrehung der Teller relativ zueinander in Verstellrichtung über den vorbestimmten Verstellwinkel hinaus eine der Verdrehung entgegenwirkende, durch das wenigstens eine Dämpfungselement ausgeübte Kraft wirkt.

Dies ermöglicht insbesondere eine Einstellbarkeit der gewünschten aufzuwendenden erhöhten Kraft durch Einlegen eines oder mehrere Dämpfungselemente bzw. durch Dämpfungselemente mit unterschiedlich großem Dämpfungsfaktor.

Gemäß einer weiteren Ausführungsvariante ist an jedem der Teller wenigstens eine als Halbschale ausgebildete Aufnahmetasche angeformt. Die Halbschalen der Teller bilden in Winkelpositionen des Schwenkbeschlags zwischen einer Ausgangsposition und dem vorbestimmten Verstellwinkel axial übereinander liegend einen Aufnahmeraum für das Dämpfungselement, der durch Verschwenken des Schwenkbeschlags in Verstellrichtung von der dem vorbestimmten Verstellwinkel entsprechenden Winkelposition in Richtung einer Umschaltstellung des Schwenkbeschlags durch Relativverschiebung der Aufnahmetasche des zweiten Tellers zur Aufnahmetasche des ersten Tellers verkleinert wird.

Dadurch wird ein Zusammenstauchen des Dämpfungselements, vorzugsweise in Gestalt einer Feder, insbesondere einer Spiralfeder, bewirkt.

Neben der Ausbildung des Dämpfungselements als Feder ist es auch denkbar, in die Aufnahmetaschen einen Klotz aus elastischem Material oder ein Dämpfungselement sonstiger Bauart einzusetzen.

An dem zweiten Teller ist gemäß einer Ausführungsvariante wenigstens ein Anschlag angeformt, wobei der Mitnehmer als die Kraftwelle umgreifende Ringscheibe mit wenigstens einem sich radial nach außen erstreckenden Zahn ausgebildet ist, der in einer dem Verstellwinkel entsprechenden Winkelposition des Schwenkbeschlags an dem Anschlag anliegt.

Dies ermöglicht in einfacher Weise eine Drehbewegung des zweiten Tellers relativ zum ersten Teller nach Erreichen des Verstellwinkels, bei dem der Mitnehmer gegen den Anschlag des zweiten Tellers drückt.

Am ersten Teller ist gemäß einer Ausführungsvariante wenigstens ein in einer Verankerungsaufnahme des ersten Hebels eingesetzter Verankerungssteg zur drehfesten Fixierung des ersten Tellers am ersten Hebel angeformt, was eine einfache drehfeste Montage des ersten Tellers am ersten Hebel ermöglicht.

Die Dämpfungsbaueinheit weist gemäß einer Ausführungsvariante einen Zentralbolzen auf, mit dem die Dämpfungsbaueinheit am ersten Hebel und/oder am zweiten Hebel axial zur Schwenkachse fixiert ist.

Dadurch wird ein Abheben des zweiten Tellers vom ersten Teller bei Verdrehen der Teller zueinander verhindert.

Die Teller können gemäß einer Ausführungsvariante als Kunststoffbauteile ausgebildet Sein. Gemäß einer weiteren Ausführungsvariante können die Teller auch als Stahlbauteile ausgebildet sein.

Nachfolgend werden bevorzugte Ausführungsbeispiele der Erfindung anhand der beiliegenden Zeichnungen näher erläutert. Es zeigen:
- Figur 1: eine Draufsicht auf eine Ausführungsvariante eines erfindungsgemäßen Schwenkbeschlages in einer Ausgangsstellung,
- Figur 2: eine perspektivische Ansicht des Schwenkbeschlages aus Figur 1 mit in Explosionsdarstellung gezeigter Dämpfungsbaueinheit,
- Figur 3: eine perspektivische Darstellung einer ersten Ausführungsvariante der Dämpfungsbaueinheit,
- Figur 4: eine perspektivische Explosionsdarstellung der Dämpfungsbaueinheit aus Figur 3,
- Figuren 5 und 6: den Figuren 3 und 4 entsprechende Darstellungen einer zweiten Ausführungsvariante einer Dämpfungsbaueinheit,
- Figur 7: eine Draufsicht auf den Schwenkbeschlag gemäß Figur 1 mit teilweise aufgerissener Dämpfungsbaueinheit in einer Ausgangsstellung des Schwenkbeschlags,
- Figur 8: eine der Figur 7 entsprechende Darstellung des Schwenkbeschlags in um den vorbestimmten Verstellwinkel verschwenkten zweiten Hebel,
- Figur 9: eine der Figur 7 entsprechende Ansicht des Schwenkbeschlags in der Umschaltstellung,
- Figur 10: eine Draufsicht auf eine weitere Ausführungsvariante eines erfindungsgemäßen Schwenkbeschlages in einer Ausgangsstellung,
- Figur 11: eine perspektivische Ansicht des Schwenkbeschlages aus Figur 10 mit in Explosionsdarstellung gezeigter Dämpfungsbaueinheit,
- Figur 12: eine perspektivische Darstellung einer Unterseite des in Figur 11 gezeigten ersten Tellers,
- Figur 13: eine Draufsicht von unten auf den im zweiten Teller montierten ersten Teller und des Mitnehmers des Schwenkbeschlages aus Figur 11,
- Figur 14: eine Draufsicht entsprechend zu Figur 7 auf den Schwenkbeschlag gemäß Figur 10 mit teilweise aufgerissener Dämpfungsbaueinheit in einer Ausgangsstellung des Schwenkbeschlags,
- Figur 15: eine der Figur 14 entsprechende Darstellung des Schwenkbeschlags in um den vorbestimmten Verstellwinkel verschwenkten zweiten Hebel,
- Figur 16: eine der Figur 14 entsprechende Ansicht des Schwenkbeschlags in der Umschaltstellung, und
- Figuren 17 bis 19: perspektivische Darstellungen eines Möbels mit Armlehne in unterschiedlichen Rastpositionen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Schwenkbeschlages, des Hebels, des Rastmechanismus, der Kraftwelle, der Dämpfungsbaueinheit, der Teller, der Mitnehmer und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

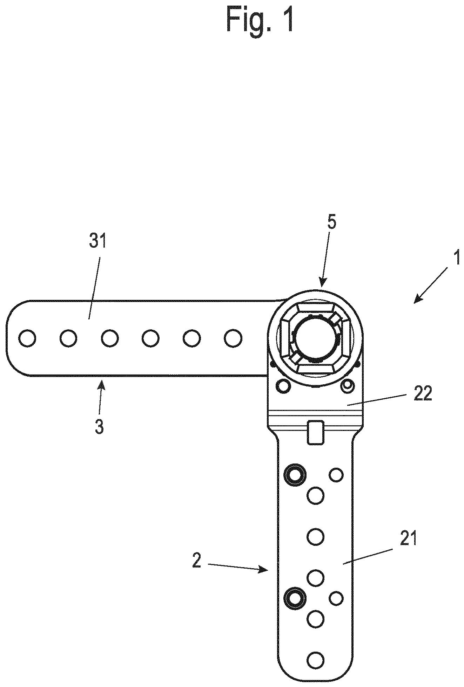

In den Figuren 1, 2 und 7 bis 9 ist mit dem Bezugszeichen 1 insgesamt eine Ausführungsvariante eines erfindungsgemäßen Schwenkbeschlages bezeichnet.

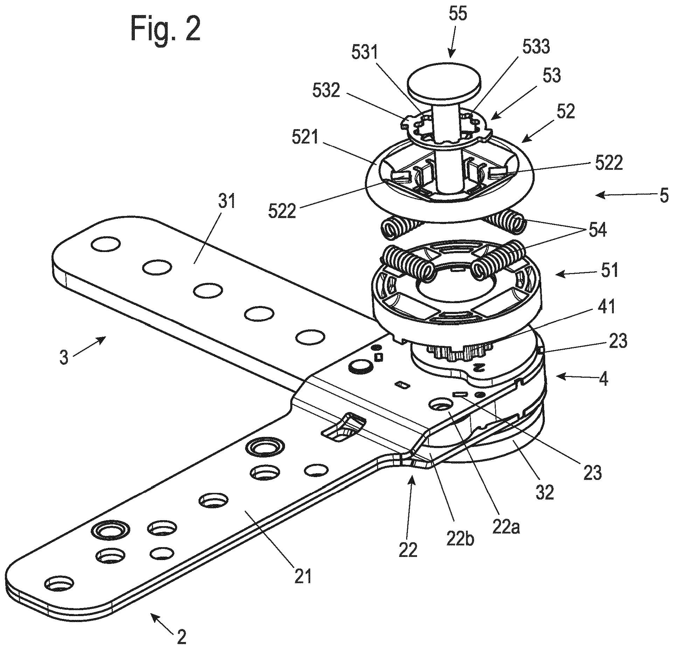

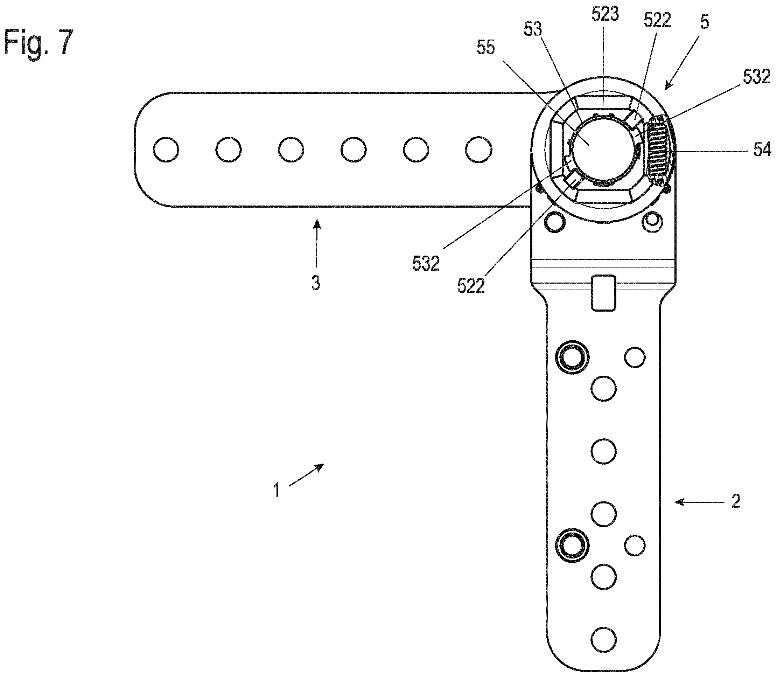

Der Schwenkbeschlag 1 weist, wie in den Figuren 1 und 2 dargestellt, einen ersten Hebel 2 und einen zweiten Hebel 3 auf. Die beiden Hebel 2, 3 sind um eine gemeinsame Schwenkachse D aus einer in Figur 1 und 7 gezeigten Ausgangsstellung heraus um einen vorbestimmten Winkel α schwenkbar zueinander gelagert.

Zwischen einem ersten Deckel 22a und einem zweiten Deckel 22b des hier aus zwei Hebelteilen bestehenden ersten Hebels 2 ist ein Rastmechanismus 4 angeordnet, mit dem die beiden Hebel 2, 3 in unterschiedlichen Winkelstellungen innerhalb des vorbestimmten Winkels α relativ zueinander verrastbar sind.

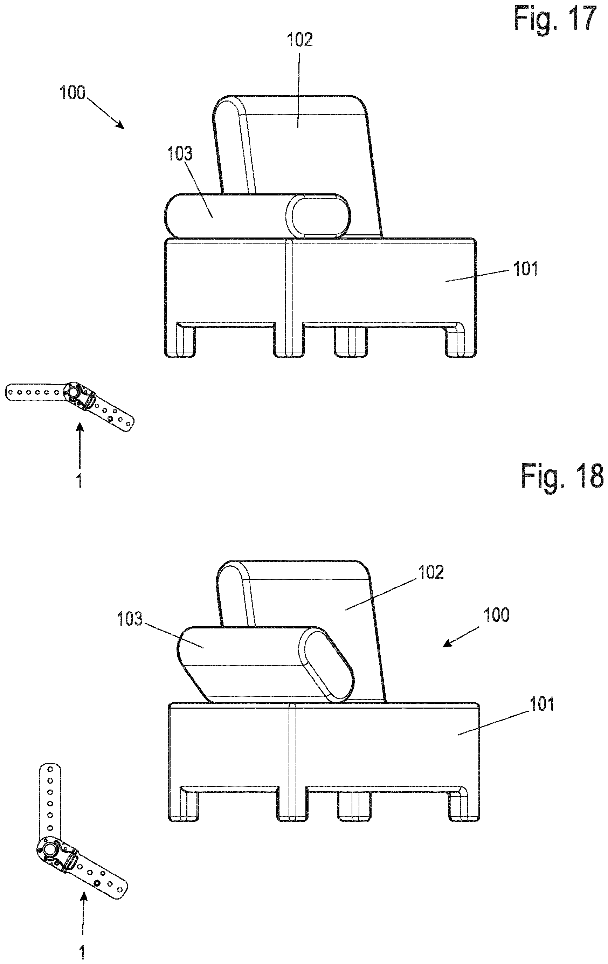

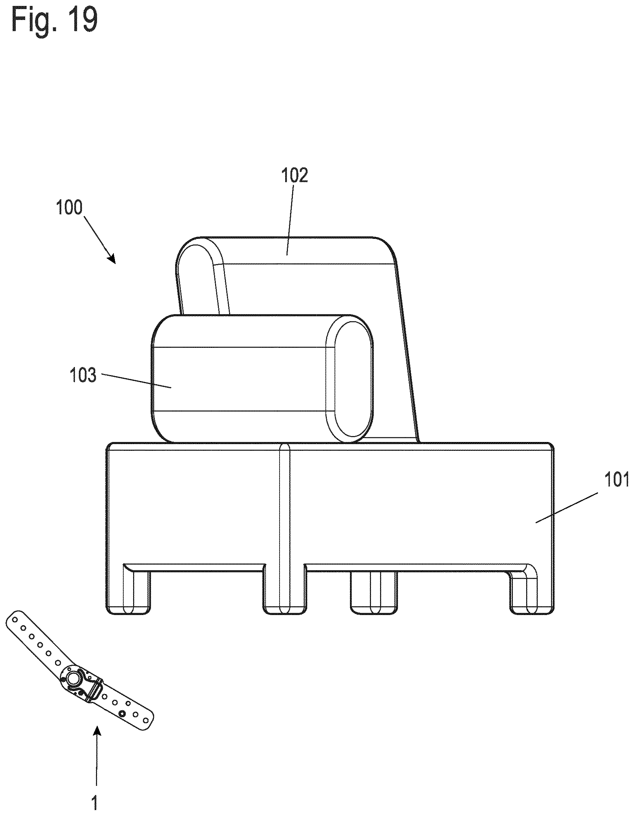

Wie in den Figuren 17 bis 19 gezeigt, wird ein Hebelarm 21 des ersten Hebels 2 bevorzugt an einem Möbelkorpus 101 eines Möbels, beispielsweise eines Sitz- oder Liegemöbels, befestigt. Ein Hebelarm 31 des zweiten Hebels 3 wird entsprechend an einem relativ zum Möbelkorpus 101 beweglichen Möbelteil, beispielsweise einer Rückenlehne 102 oder Armlehne 103 des Möbels 100 befestigt und ermöglicht so eine Winkelverstellung der Rückenlehne 102 oder Armlehne 103 relativ zum Möbelkorpus 101 des Möbels.

Der Rastmechanismus 4 ist dabei derart aufgebaut, dass die beiden Hebel 2, 3 relativ zueinander entgegen einer in Rückstellrichtung R wirkenden Kraft verrastbar und bei deaktiviertem Rastmechanismus 4 in Rückstellrichtung R verschwenkbar sind.

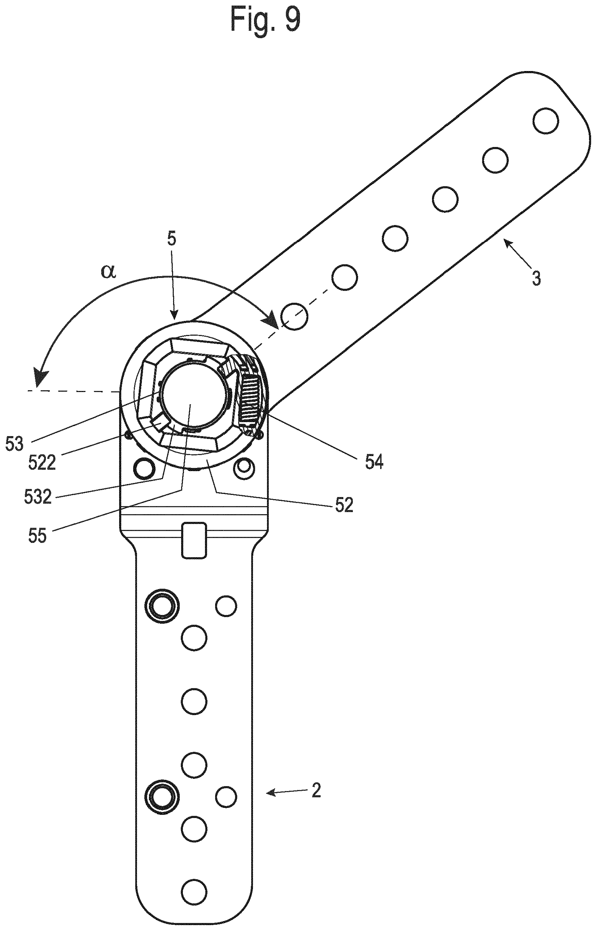

Der Rastmechanismus 4 ist durch Verschwenken des zweiten Hebels 3 relativ zum ersten Hebel 2 in Verstellrichtung V bei Erreichen einer Endposition, wie sie in Figur 9 gezeigt ist, deaktivierbar.

Der Rastmechanismus 4 weist des Weiteren eine Kraftwelle 41 auf, die mit dem zweiten Hebel 3 drehfest gekoppelt ist.

Wie in den Figuren 1, 2 und 7 bis 9 des Weiteren zu erkennen ist, ist am ersten Hebel 2 eine Dämpfungsbaueinheit 5 angeordnet, die der Erhöhung des aufzuwendenden Kraftaufwands der Schwenkbewegung des zweiten Hebels 3 relativ zum ersten Hebel 2 in Verstellrichtung V ab einem vorbestimmten Verstellwinkel β dient.

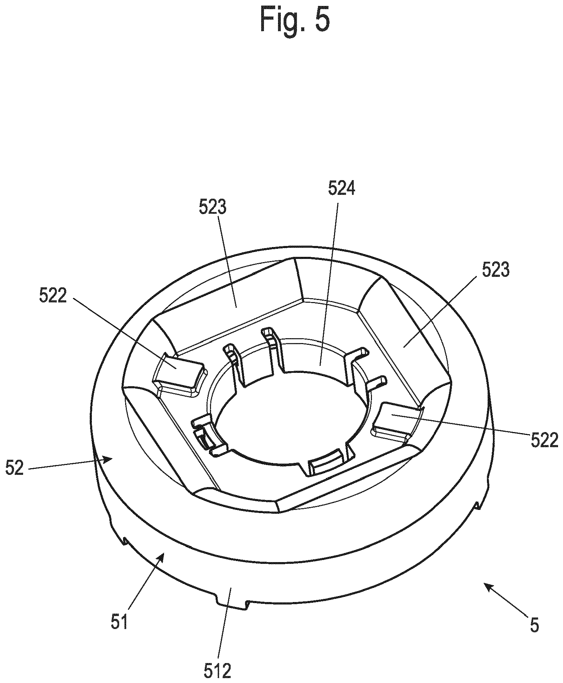

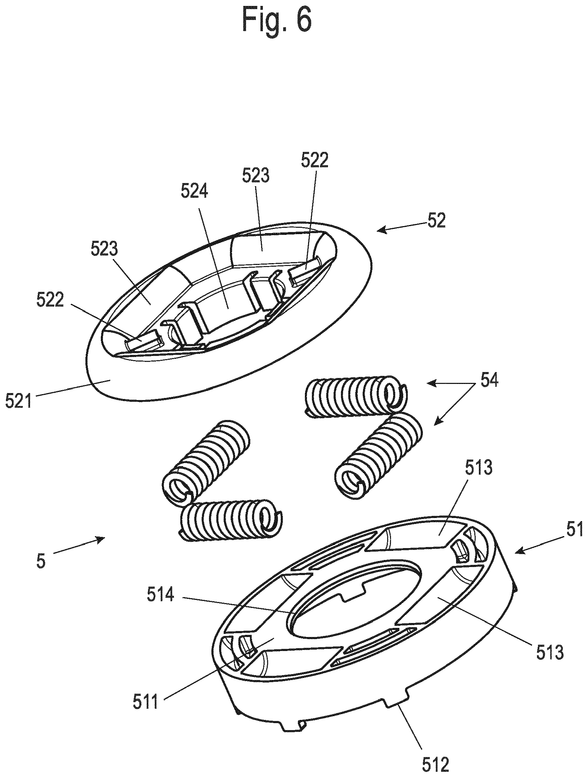

Eine erste Ausführungsvariante einer solchen Dämpfungsbaueinheit 5 ist in den Figuren 2, 5 und 6 dargestellt.

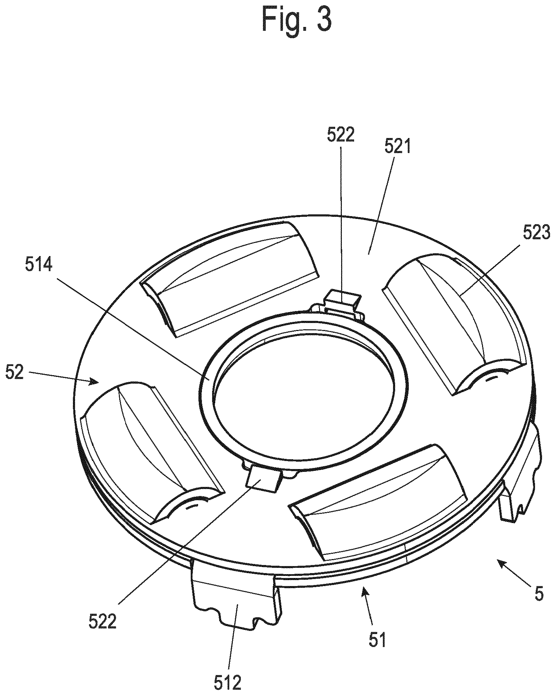

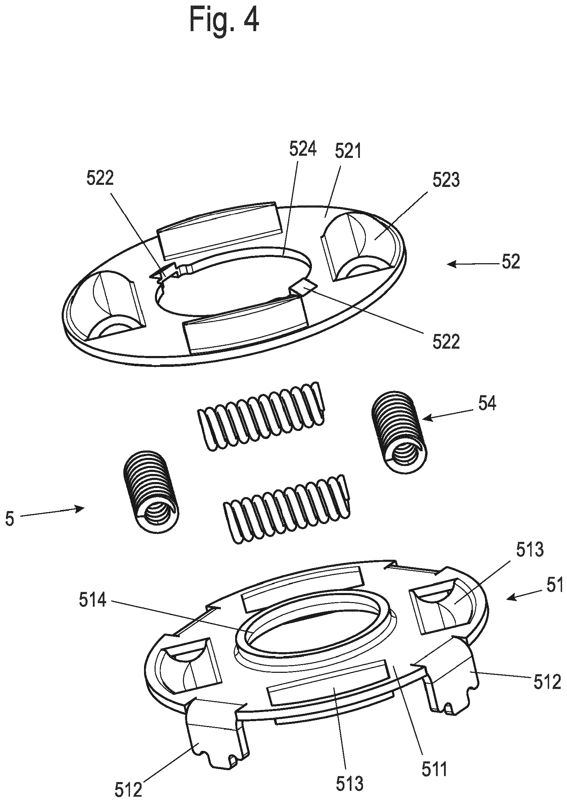

Die Figuren 3 und 4 zeigen eine alternative Ausführungsvariante einer solchen Dämpfungsbaueinheit 5.

Die Dämpfungsbaueinheit 5 beider Varianten weist einen an einem Hebelkopf 22 des ersten Hebels 2 drehfest festgelegten ersten Teller 51 und einen auf dem ersten Teller 51 aufliegenden und um die Schwenkachse D relativ zum ersten Teller 51 drehbaren zweiten Teller 52 auf.

Die drehfeste Festlegung des ersten Tellers 51 am Hebelkopf 22 des ersten Hebels 2 erfolgt dabei bevorzugt über an einem ringförmigen Grundkörper 511 des ersten Tellers 51 angeformten Verankerungsstegen 512, die in jeweiligen Verankerungsaufnahmen 23 an dem ersten Teller 51 zugewandten Flächen eines ersten Deckels 22a eines Hebelkopfes 22 des ersten Hebels 2 angeformt sind.

Die Verankerungsaufnahmen 23 können dabei innerhalb der Fläche des ersten Deckels 22a angeformt, beispielsweise eingestanzt sein. Eine oder mehrere solcher Verankerungsaufnahmen 23 können auch, wie in Figur 2 gezeigt, am umfänglichen Rand des ersten Deckels 22a des Hebelkopfs 22 ausgebildet sein.

Die Verankerungsstege 512 erstrecken sich hier in axialer Richtung vom Grundkörper 511 des ersten Tellers 51.

Je nach Ausgestaltung des ersten Tellers 51 und des Hebelkopfs 22 des ersten Hebels 2 ist es auch denkbar, die Stege so zu formen, dass sie sich radial nach innen in entsprechende Ausnehmungen des Hebelkopfes 22 erstrecken. Denkbar ist auch ein Ankleben oder Anschrauben des ersten Tellers 51 an den Hebelkopf 22 des ersten Hebels 2.

Der zweite Teller 52 wird bevorzugt mithilfe eines Zentralbolzens 55, der sich durch zentrale Öffnungen im zweiten Teller 52, im ersten Teller 51 und der Kraftwelle 41 erstreckt und an der Kraftwelle 41, am ersten Hebel 2 und/oder am zweiten Hebel 3 axial fixiert ist, axial gehalten.

In einer dem ersten Teller 51 abgewandten Fläche des zweiten Tellers 52 ist ein mit der Kraftwelle 41, die sich durch die zentralen Öffnungen des ersten Tellers 51 und des zweiten Tellers 52 erstreckt, drehfest gekoppelter Mitnehmer 53 aufgenommen.

Der Mitnehmer 53 ist dabei derart am zweiten Teller 52 gelagert, dass er um einen vorbestimmten Verstellwinkel β relativ zum zweiten Teller 52 drehbar ist.

Der Mitnehmer 53 dient dazu, den zweiten Teller 52 relativ zum ersten Teller 51 ab einer Drehung in Verstellrichtung V, die den vorbestimmten Verstellwinkel β übersteigt, mitzunehmen.

Dazu sind am zweiten Teller 52 auf der dem ersten Teller 51 abgewandten Fläche 2 Anschläge 522 angeformt, mit sich radial erstreckenden Anschlagkanten, die mit zwei Zähnen 532 des als Ringscheibe 531 ausgebildeten Mitnehmers 53 in einer dem Verstellwinkel β entsprechenden Winkelposition des Schwenkbeschlags 1 anliegen. Denkbar ist auch, nur einen solchen Anschlag 522 am zweiten Teller 52 anzuformen und entsprechend den Mitnehmer mit lediglich einem solchen Zahn 532, der sich radial nach außen von der Ringscheibe 531 erstreckt, auszubilden, je nach möglichem Winkelverstellbereich des Schwenkbeschlags 1.

Die Drehlagerung des ersten Tellers 51 relativ zum zweiten Teller 52 erfolgt durch einen in den Figuren 2, 5 und 6 am zweiten Teller 52 angeformten, sich in axialer Richtung zur Schwenkachse D erstreckenden Halsring 524, der am Innenrand 514 der zentralen Ausnehmung des ersten Tellers 51 anliegt.

Bei der in den Figuren 3 und 4 gezeigten Ausführungsvariante der Dämpfungsbaueinheit 5 ist ein solcher ringförmiger Hals 514 am ersten Teller 51 angeformt und erstreckt sich radial nach oben und liegt im montierten Zustand der Dämpfungsbaueinheit 5 am Innenrand 524 des zweiten Tellers 52 an.

Die Verdrehung des zweiten Tellers 52 relativ zum ersten Teller 51 ab dem vorbestimmten Verstellwinkel β wird durch vier Dämpfungselemente 54 erschwert, die in Aufnahmetaschen 513, 523 der Teller 51, 52 drehfest gelagert sind.

Die Dämpfungselemente 54 sind in der hier gezeigten Ausführungsvariante als Federn, insbesondere Spiralfedern ausgebildet.

Denkbar sind auch Dämpfungselemente anderer Bauart, beispielsweise eines massiven elastischen Körpers oder eines Dämpfungszylinders, bei dem eine rückseitige Basisfläche des Zylinderteils an einer radial ausgerichteten Taschenwand des ersten Tellers 51 anliegt und das aus dem Zylinderteil vorstehende Ende eines Zylinderstößels mit der radial ausgerichteten Wand einer Aufnahmetasche 523 des zweiten Tellers 52 gekoppelt ist.

Denkbar ist auch, weniger als vier solcher Dämpfungselemente 54 und dementsprechend auch eine geringere Anzahl an Aufnahmetaschen 513, 523 in den Tellern 51, 52 vorzusehen.

Die Dämpfungselemente 54 sind derart in den Aufnahmetaschen 513, 523 gelagert, dass einer Verdrehung der Teller 51, 52 relativ zueinander über den vorbestimmten Verstellwinkel β in Verstellrichtung V hinaus eine der Verdrehung entgegenwirkende, durch die Dämpfungselemente 54 ausgeübte Kraft wirkt.

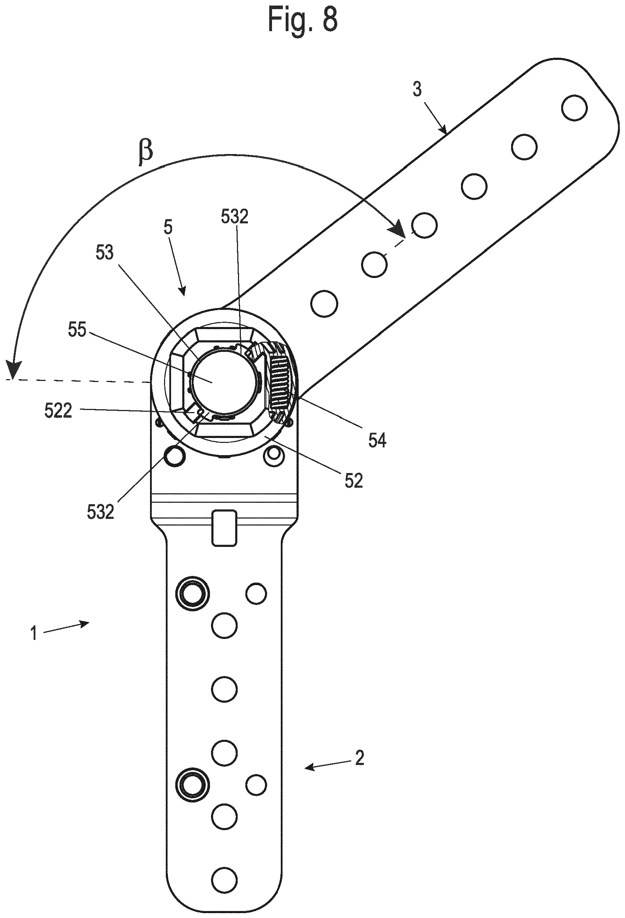

Die Aufnahmetaschen 513, 523 sind, wie in den Figuren 2, 4 und 6 gezeigt, als Halbschalen ausgebildet, die in Winkelpositionen des Schwenkbeschlags 1 zwischen einer Ausgangsposition, gezeigt in Figur 1, und dem vorbestimmten Verstellwinkel, gezeigt in Figur 8, axial übereinander liegend einen Aufnahmeraum für die Dämpfungselemente 54 bilden.

Durch Verschwenken des Schwenkbeschlags 1 zwischen der in Figur 8 gezeigten, dem vorbestimmten Verstellwinkel β entsprechenden Winkelposition in Richtung einer in Figur 9 gezeigten Umschaltstellung des Schwenkbeschlags 1 wird durch die Relativverschiebung der Aufnahmetasche 523 des zweiten Tellers 52 zu den Aufnahmetaschen 513 des ersten Tellers 52 der Aufnahmeraum für die Dämpfungselemente reduziert. Dies führt zu einer Stauchung der hier als Spiralfedern ausgebildeten Dämpfungselemente 54, wobei die Stauchung der Spiralfedern eines zusätzlichen Kraftaufwands bedarf, der für den Benutzer des Schwenkbeschlags 1 spürbar ist und dem Benutzer damit das Überfahren des vorbestimmten Verstellwinkels β des Schwenkbeschlags 1 anzeigt.

Die in den Figuren 3 und 4 gezeigte Ausführungsvariante der Dämpfungsbaueinheit 5 eignet sich insbesondere für eine Herstellung zumindest der Teller 51, 52 der Dämpfungsbaueinheit 5 aus Stahl.

Die in den Figuren 2, 5 und 6 gezeigte Ausführungsvariante der Dämpfungsbaueinheit 5 eignet sich insbesondere für eine Dämpfungsbaueinheit 5 mit aus einem Kunststoff gefertigten Tellern 51, 52.

Denkbar ist auch, an der Kraftwelle 41 ein oder mehrere überstehende Zähne anzuformen, die nach Verdrehung um den vorbestimmten Winkel an einer oder mehreren Erhöhungen am Innenrand 524 des zweiten Tellers 52 anstehen und die Verdrehung übernehmen.

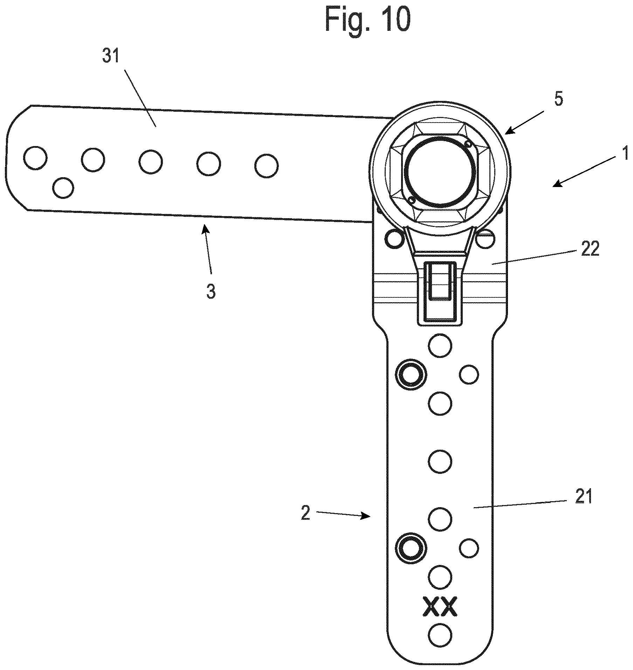

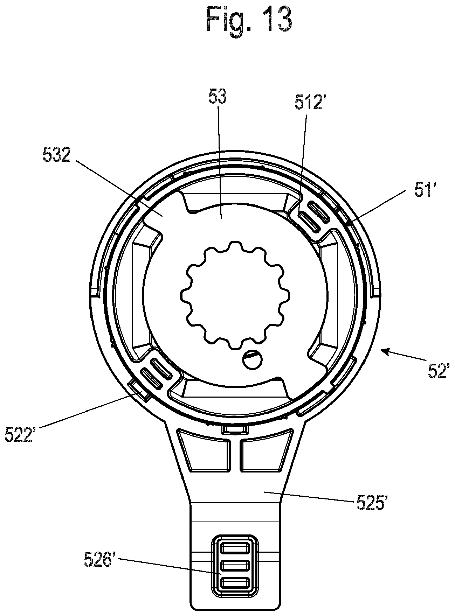

Anhand der Figuren 10 bis 16 wird nachfolgend eine weitere Ausführungsvariante eines erfindungsgemäßen Schwenkbeschlags beschrieben.

Im Unterschied zu der anhand der Figuren 1 bis 9 beschriebenen Variante ist hier der zweite Teller 52' drehfest am ersten Hebel 2 festgelegt. Der zweite Teller 52' umschließt dabei die übrigen Bauteile der Dämpfungsbaueinheit 5, insbesondere den ersten Teller 51', den Mitnehmer 53 und die Federelemente 54, wobei die zentrale Ausnehmung im zweiten Teller 52' zur Aufnahme des Zentralbolzens 55 durch eine kreisscheibenförmige Kappe des Zentralbolzens 55 verschlossen wird.

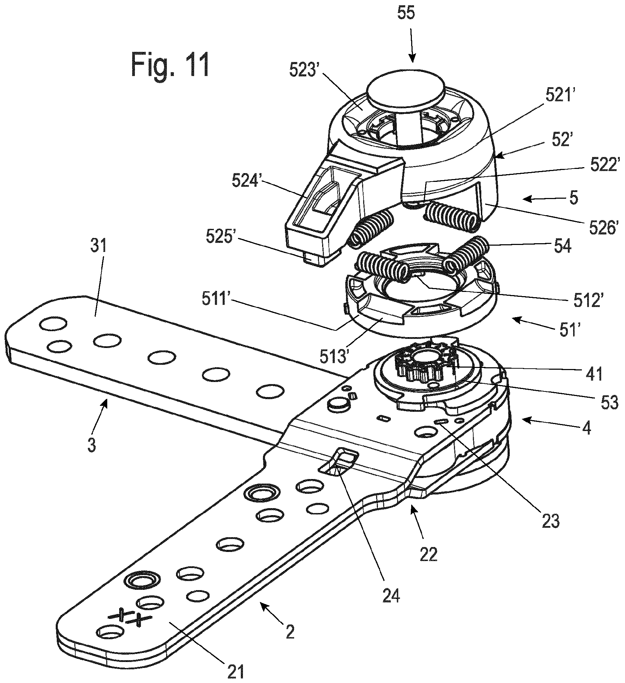

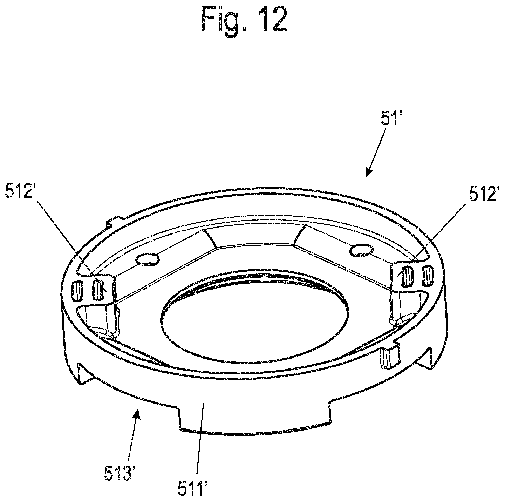

Der Mitnehmer 53 ist bei dieser Ausführungsvariante nicht zwischen dem ersten Teller 51' und dem zweiten Teller 52' angeordnet, sondern unterhalb des ersten Tellers 51', zwischen dem ersten Teller 51' und dem ersten Hebel 2. Entsprechend sind die mit dem Mitnehmer 53 beim Schwenken der Hebel 2, 3 relativ zueinander wechselwirkenden Anschläge 512' nunmehr an einer Unterseite des ersten Tellers 51' angeformt, wie es in den Figuren 11 und 12 dargestellt ist.

Zur drehfesten Fixierung des zweiten Tellers 52' am ersten Hebel 2 weist der zweite Teller 52' darüber hinaus einen Mitnehmerarm 524' mit einem an einer Unterseite des Mitnehmerarms 524' angeordneten, insbesondere angeformten Mitnehmerzapfen 525' auf, der in eine dazu vorgesehene Zapfenaufnahme 24 am ersten Hebel 2 einsteckbar ist.

Bevorzugt ist ergänzend dazu am zweiten Teller 52' an einem unteren Rand des Grundkörpers 521' wenigstens ein Verankerungssteg 522' zur drehfesten Fixierung des zweiten Tellers 52' am ersten Hebel 2 angeformt, der in eine entsprechende Verankerungsaufnahme 23 des ersten Hebels 2 einsetzbar ist.

Des Weiteren weist der zweite Teller bevorzugt eine Schürze 526' auf, die zumindest einen Teilumfangsabschnitt des Kopfes 22 des ersten Hebels 2 überdeckt, was den Schutz vor einem Eindringen von Schmutz ins Innere des Schwenkbeschlages 1 nochmals verbessert.

Die Dämpfungselemente 54 sind wie bei der weiter oben beschriebenen Ausführungsvariante in jeweiligen Aufnahmetaschen 513', 523' der Teller 51, 52 aufgenommen, wobei auch hier das wenigstens eine Dämpfungselement 54 so gelagert ist, dass bei Verdrehung der Teller 51', 52' relativ zueinander in Verstellrichtung V über den vorbestimmten Verstellwinkel β hinaus eine der Verdrehung entgegenwirkende, durch das wenigstens eine Dämpfungselement 54 ausgeübte Kraft wirkt.

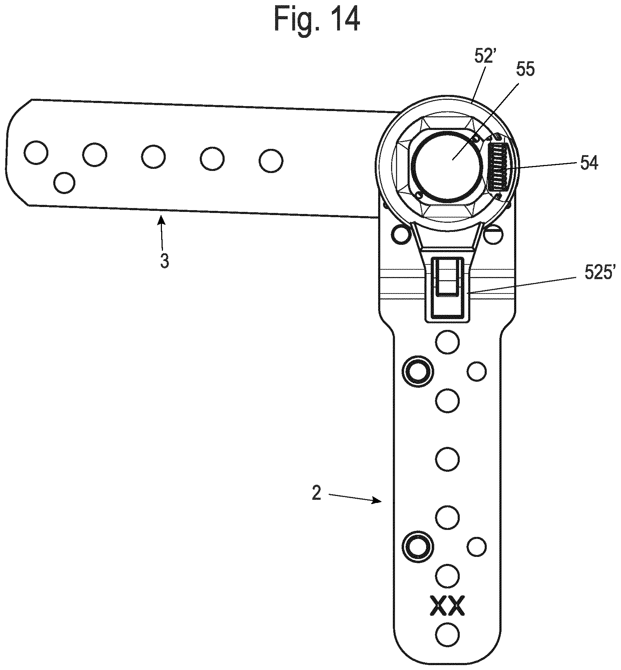

Die in den Figuren 14 bis 16 dargestellte Funktionsweise des Schwenkbeschlags erfolgt analog zur weiter oben beschriebenen Ausführungsvariante des Schwenkbeschlags 1 mit den Tellern 51, 52.

Die Funktionsweise dieser Ausführungsvariante des Schwenkbeschlags ist durch die Figuren 14 bis 16 verdeutlicht.

Figur 14 zeigt dabei die Ausgangsposition, entsprechend Figur 7 der zuvor beschriebenen Ausführungsvariante, bei der die hier vier zwischen dem ersten Teller 51' und dem zweiten Teller 52' eingesetzten Dämpfungselemente 54 im entspannten Zustand in den Aufnahmetaschen 513', 523' einliegen.

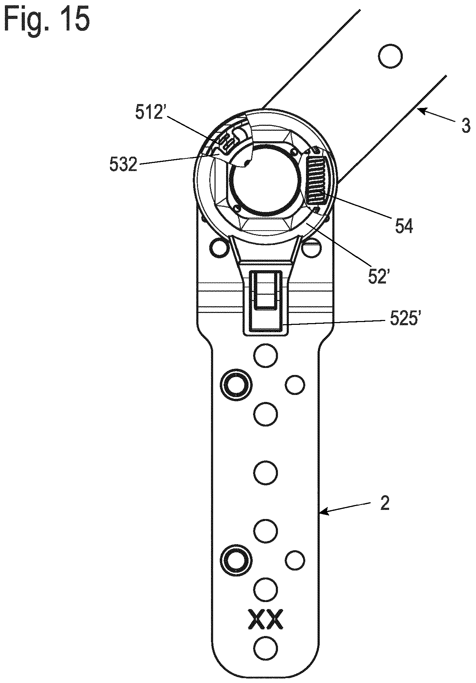

Durch Verschwenken von dieser Ausgangsstellung in die in Figur 15 gezeigte, um den vorbestimmten Verstellwinkel β verschwenkte Position, bei der der Mitnehmer unterhalb des ersten Tellers 51' zusammen mit dem zweiten Hebel 3 drehbar ist, ohne den ersten Teller 51' mitzubewegen, liegen die Zähne 532 des auch hier als Ringscheibe 531 ausgebildeten Mitnehmers 53 an den Anschlägen 512' auf der Unterseite des ersten Tellers 51' an, wie in dem Aufriss der Figur 15 erkennbar ist.

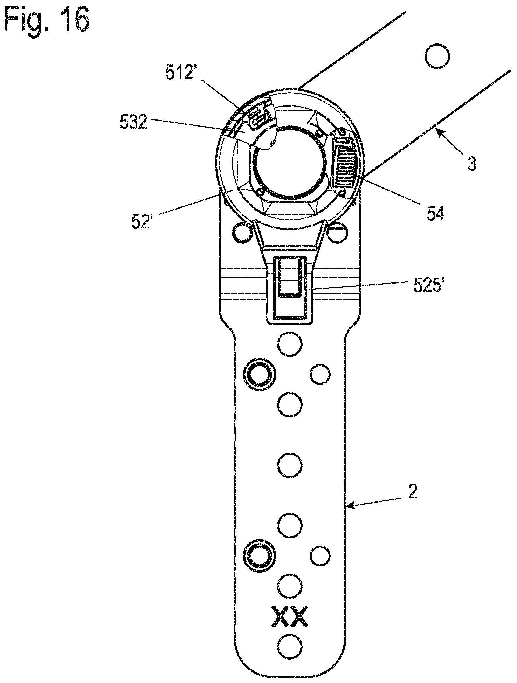

Durch Verschwenken des Verschwenkbeschlags zwischen der in Figur 15 gezeigten Winkelposition in Richtung der in Figur 16 gezeigten Umschaltstellung des Schwenkbeschlags (entsprechend Figur 9 der oben beschriebenen Ausführungsvariante), wird auch hier durch die Relativverschiebung der Aufnahmetaschen 513', 523' der Aufnahmeraum für die Dämpfungselemente 54 reduziert, was zu einer Stauchung der Dämpfungselemente 54 führt, die eines zusätzlichen Kraftaufwands bedarf, der für den Benutzer des Schwenkbeschlags 1 spürbar ist und dem Benutzer damit das Überfahren des vorbestimmten Verstellwinkels β des Schwenkbeschlags 1 anzeigt.

### Bezugszeichenliste

- 1: Schwenkbeschlag
- 2: erster Hebel
- 21: Hebelarm
- 22: Hebelkopf
- 22a: erster Deckel
- 22b: zweiter Deckel
- 23: Verankerungsaufnahme
- 24: Zapfenaufnahme

- 3: zweiter Hebel
- 31: Hebelarm
- 32: Hebelkopf

- 4: Rastmechanismus
- 41: Kraftwelle

- 5: Dämpfungsbaueinheit

- 51: erster Teller
- 511: Grundkörper
- 512: Verankerungssteg
- 513: Aufnahmetasche
- 514: Halsstück / Innenrand

- 52: zweiter Teller
- 521: Grundkörper
- 522: Anschlag
- 523: Aufnahmetasche
- 524: Innenrand / Halsring

- 51': erster Teller
- 511': Grundkörper
- 512': Anschlag
- 513': Aufnahmetasche

- 52': zweiter Teller
- 521': Grundkörper
- 522': Verankerungssteg
- 523': Aufnahmetasche
- 524': Mitnehmerarm
- 525': Mitnehmerzapfen
- 526': Schürze

- 53: Mitnehmer
- 531: Ringkörper / Ringscheibe
- 532: Anschlag /Zahn
- 533: Innenverzahnung

- 54: Federelement /Dämpfungselement
- 55: Zentralbolzen

- 100: Möbel
- 101: Möbelkorpus
- 102: Rückenlehne
- 103: Armlehne

- D: Schwenkachse
- V: Verstellrichtung
- R: Rückstellrichtung
- α: Winkel
- β: Verstellwinkel

## Patentansprüche

1. Schwenkbeschlag (1), insbesondere für bewegliche Möbelteile an Möbeln, aufweisend
- einen ersten Hebel (2) und einen zweiten Hebel (3), die um eine Schwenkachse (D) aus einer Grundstellung heraus um einen vorbestimmten Winkel (α) schwenkbar zueinander in einer Verstellrichtung (V) und einer Rückstellrichtung (R) gelagert sind,
- einen Rastmechanismus (4), mit dem die beiden Hebel (2, 3) in unterschiedlichen Winkelstellungen innerhalb des vorbestimmten Winkels (α) relativ zueinander entgegen einer in Rückstellrichtung (R) wirkenden Kraft verrastbar und bei deaktiviertem Rastmechanismus (4) in Rückstellrichtung (R) verschwenkbar sind,
- wobei eine Kraftwelle (41) des Rastmechanismus (4) mit dem zweiten Hebel (3) drehfest gekoppelt ist,
- wobei der Rastmechanismus (4) durch Verschwenken des zweiten Hebels (3) relativ zum ersten Hebel (2) in Verstellrichtung (V) bei Erreichen einer Umschaltposition deaktivierbar ist,
**dadurch gekennzeichnet, dass**
- am ersten Hebel (2) eine Dämpfungsbaueinheit (5) zur Abdämpfung der Schwenkbewegung des zweiten Hebels (3) relativ zum ersten Hebel (2) in Verstellrichtung (V) ab einem vorbestimmten Verstellwinkel (β) angeordnet ist,
- wobei die Dämpfungsbaueinheit (5) derart angeordnet ist, dass diese ab dem vorbestimmten Verstellwinkel (β) eine Erhöhung der benötigten Verstellkraft gegenüber einer benötigten Verstellkraft vor Erreichen des vorbestimmten Verstellwinkels (β) bewirkt.

2. Schwenkbeschlag nach Anspruch 1, **dadurch gekennzeichnet, dass** die Dämpfungsbaueinheit (5) einen an einem Hebelkopf (22) des ersten Hebels (2) drehfest festgelegten ersten Teller (51), einen auf dem ersten Teller (51) aufliegenden und um die Schwenkachse (D) relativ zum ersten Teller (51) drehbaren zweiten Teller (52) und wenigstens ein zwischen den Tellern (51, 52) angeordnetes und mit beiden Tellern (51, 52) gekoppeltes, einer Drehbewegung des zweiten Tellers (52) relativ zum ersten Teller (51) in Verstellrichtung (V) entgegenwirkendes Dämpfungselement (54) aufweist.

3. Schwenkbeschlag nach Anspruch 1, **dadurch gekennzeichnet, dass** die Dämpfungsbaueinheit (5) einen an einem Hebelkopf (22) des ersten Hebels (2) um die Schwenkachse (D) drehbaren ersten Teller (51'), einen auf dem ersten Teller (51') aufliegenden drehfest am ersten Hebel (2) festgelegten zweiten Teller (52') und wenigstens ein zwischen den Tellern (51', 52') angeordnetes und mit beiden Tellern (51', 52') gekoppeltes, einer Drehbewegung des zweiten Tellers (52') relativ zum ersten Teller (51') in Verstellrichtung (V) entgegenwirkendes Dämpfungselement (54) aufweist.

4. Schwenkbeschlag nach Anspruch 2 oder 3, **dadurch gekennzeichnet, dass** die Dämpfungsbaueinheit (5) einen mit dem drehbaren Teller (51') um den vorbestimmten Verstellwinkel (β) relativ zu diesem drehbar und mit der Kraftwelle (41) drehfest gekoppelten Mitnehmer (53) aufweist.

5. Schwenkbeschlag nach einem der Ansprüche 2 bis 4, **dadurch gekennzeichnet, dass** in den Tellern (51, 52, 51', 52') wenigstens eine Aufnahmetasche (513, 523, 513', 523') zur drehfesten Lagerung des wenigstens einen Dämpfungselements (54) angeformt ist, wobei das wenigstens eine Dämpfungselement (54) derart gelagert ist, das einer Verdrehung der Teller (51, 52, 51', 52') relativ zueinander in Verstellrichtung (V) über den vorbestimmten Verstellwinkel (β) hinaus eine der Verdrehung entgegenwirkende, durch das wenigstens eine Dämpfungselement (54) ausgeübte Kraft wirkt.

6. Schwenkbeschlag nach Anspruch 5, **dadurch gekennzeichnet, dass** an jedem der Teller (51, 52, 51', 52') wenigstens eine als Halbschale ausgebildete Aufnahmetasche (513, 523, 513', 523') angeformt ist, wobei die Halbschalen der Teller (51, 52, 51', 52') in Winkelpositionen des Schwenkbeschlags (1) zwischen einer Ausgangsposition und dem vorbestimmten Verstellwinkel (β) axial übereinander liegend einen Aufnahmeraum für das Dämpfungselement (54) bilden, der durch Verschwenken des Schwenkbeschlags (1) in Verstellrichtung (V) von der dem vorbestimmten Verstellwinkel (β) entsprechenden Winkelpositionen in Richtung einer Umschaltstellung des Schwenkbeschlags (1) durch Relativverschiebung der Aufnahmetasche (523, 523') des zweiten Tellers (52, 52') zur Aufnahmetasche (513, 513') des ersten Tellers (51, 51') verkleinert wird.

7. Schwenkbeschlag nach einem der vorstehenden Ansprüche 2 bis 6, **dadurch gekennzeichnet, dass** das wenigstens eine Dämpfungselement (54) als Feder, insbesondere als Spiralfeder ausgebildet ist.

8. Schwenkbeschlag nach einem der vorstehenden Ansprüche 2 und 4 bis 7, **dadurch gekennzeichnet, dass** am zweiten Teller (52) wenigstens ein Anschlag (522) angeformt ist und der Mitnehmer (53) als die Kraftwelle (41) umgreifende Ringscheibe (531) mit wenigstens einem sich radial nach außen erstreckenden Zahn (532) ausgebildet ist, der in einer dem Verstellwinkel (β) entsprechenden Winkelposition des Schwenkbeschlags an dem Anschlag (522) anliegt.

9. Schwenkbeschlag nach einem der vorstehenden Ansprüche 3 bis 7, **dadurch gekennzeichnet, dass** am ersten Teller (51') wenigstens ein Anschlag (512') angeformt ist und der Mitnehmer (53) als die Kraftwelle (41) umgreifende Ringscheibe (531) mit wenigstens einem sich radial nach außen erstreckenden Zahn (532) ausgebildet ist, der in einer dem Verstellwinkel (β) entsprechenden Winkelposition des Schwenkbeschlags an dem Anschlag (512') anliegt.

10. Schwenkbeschlag nach einem der vorstehenden Ansprüche 2 und 5 bis 8, **dadurch gekennzeichnet, dass** am ersten Teller (51) wenigstens ein in einer Verankerungsaufnahme (23) des ersten Hebels (2) eingesetzter Verankerungssteg (512) zur drehfesten Fixierung des ersten Tellers (51) am ersten Hebel (2) angeformt ist.

11. Schwenkbeschlag nach einem der vorstehenden Ansprüche 3 bis 7 und 9, **dadurch gekennzeichnet, dass** am zweiten Teller (52) wenigstens ein in einer Verankerungsaufnahme (23) des ersten Hebels (2) eingesetzter Verankerungssteg (522') zur drehfesten Fixierung des zweiten Tellers (52) am ersten Hebel (2) angeformt ist.

12. Schwenkbeschlag nach einem der vorstehenden Ansprüche 3 bis 7, 9 und 11, **dadurch gekennzeichnet, dass** der zweite Teller (52) als den ersten Teller (51) überdeckende Abdeckung ausgebildet ist.

13. Schwenkbeschlag nach einem der vorstehenden Ansprüche 3 bis 7, 9, 11 und 12, **dadurch gekennzeichnet, dass** der zweite Teller (52) einen Mitnehmerarm (525') mit einem Mitnehmerzapfen (526') zur drehfesten Fixierung des zweiten Tellers (52) am ersten Hebel (2) aufweist.

14. Schwenkbeschlag nach einem der vorstehenden Ansprüche 2 bis 12, **dadurch gekennzeichnet, dass** die Dämpfungsbaueinheit (5) einen Zentralbolzen (55) aufweist, mit dem die Dämpfungsbaueinheit (5) am ersten Hebel (2) und/oder am zweiten Hebel (3) axial zur Schwenkachse (D) fixiert ist.

15. Schwenkbeschlag nach einem der vorstehenden Ansprüche 2 bis 13, **dadurch gekennzeichnet, dass** zumindest die Teller (51, 52, 51', 52') als Kunststoffbauteile oder Stahlbauteile ausgebildet sind.

16. Möbel (100) mit einem Schwenkbeschlag (1) nach einem der vorhergehenden Ansprüche.

17. Möbel (100) nach Anspruch 16, **dadurch gekennzeichnet, dass** der Schwenkbeschlag (1) eine Armlehne (103) oder andere verstellbare Möbelteile an einem Möbelkorpus (101) eines als Polstermöbel, Sitz- oder Liegemöbel ausgebildeten Möbels (100) verstellbar fixiert.

## Claims

1. A pivot fitting (1), in particular for movable furniture parts on pieces of furniture, comprising
- a first lever (2) and a second lever (3), which are mounted so they are pivotable in relation to one another in an adjustment direction (V) and a reset direction (R) around a pivot axis (D) from a base position by a predetermined angle (α),
- a catch mechanism (4), using which the two levers (2, 3) can be latched in relation to one another against a force acting in the reset direction (R) in different angular positions within the predetermined angle (α) and can be pivoted in the reset direction (R) when the catch mechanism (4) is deactivated,
- wherein a force shaft (41) of the catch mechanism (4) is coupled in a rotationally-fixed manner to the second lever (3),
- wherein the catch mechanism (4) is deactivatable by pivoting the second lever (3) in relation to the first lever (2) in the adjustment direction (V) upon reaching a switchover position,
**characterized in that**
- a damping unit (5) is arranged on the first lever (2) for damping the pivot movement of the second lever (3) in relation to the first lever (2) in the adjustment direction (V) from a predetermined adjustment angle (β),
- whereby the damping unit (5) is arranged such that from the predetermined adjustment angle (β) the adjustment force needed is increased in comparison to the adjustment force needed before reaching the predetermined adjustment angle (β).

2. The pivot fitting according to Claim 1, **characterized in that** the damping unit (5) comprises a first plate (51), which is secured in a rotationally-fixed manner on a lever head (22) of the first lever (2), a second plate (52), which rests on the first plate (51) and is rotatable around the pivot axis (D) in relation to the first plate (51), and at least one damping element (54), which is arranged between the plates (51, 52) and is coupled to both plates (51, 52) and counteracts a rotational movement of the second plate (52) in relation to the first plate (51) in the adjustment direction (V).

3. The pivot fitting according to Claim 1, **characterized in that** the damping unit (5) comprises a first plate (51') rotatable around the pivot axis (D) on a lever head (22) of the first lever (2), a second plate (52'), which rests on the first plate (51') and is secured in a rotationally-fixed manner on the first lever (2), and at least one damping element (54), which is arranged between the plates (51', 52') and is coupled to both plates (51', 52'), and which counteracts a rotational movement of the second plate (52') in relation to the first plate (51') in the adjustment direction (V).

4. The pivot fitting according to Claim 2 or 3, **characterized in that** the damping unit (5) comprises a driver (53), which is rotatable in relation to the rotatable plate (51') by the predetermined adjustment angle (β) and is coupled in a rotationally-fixed manner to the force shaft (41).

5. The pivot fitting according to any one of Claims 2 to 4, **characterized in that** at least one receptacle pocket (513, 523, 513', 523') for the rotationally-fixed mounting of the at least one damping element (54) is formed in the plates (51, 52, 51', 52'), wherein the at least one damping element (54) is mounted in such a way that a pivot of the plates (51, 52, 51', 52') in relation to one another in the adjustment direction (V) beyond the predetermined adjustment angle (β) causes a force, which counteracts the pivot and is exerted by the at least one damping element (54).

6. The pivot fitting according to Claim 5, **characterized in that** at least one receptacle pocket (513, 523, 513', 523') formed as a half shell is formed on each of the plates (51, 52, 51', 52'), wherein the half shells of the plates (51, 52, 51', 52'), in angular positions of the pivot fitting (1) between a starting position and the predetermined adjustment angle (β), form a receptacle chamber for the damping element (54) while located axially one on top of another, which receptacle chamber is reduced in size by pivoting the pivot fitting (1) in the adjustment direction (V) from the angular positions corresponding to the predetermined adjustment angle (β) in the direction of a switchover position of the pivot fitting (1) by relative displacement of the receptacle pocket (523, 523') of the second plate (52, 52') in relation to the receptacle pocket (513, 513') of the first plate (51, 51').

7. The pivot fitting according to any one of preceding Claims 2 to 6, **characterized in that** the at least one damping element (54) is formed as a spring, in particular as a coiled spring.

8. The pivot fitting according to any one of preceding Claims 2 and 4 to 7, **characterized in that** at least one stop (522) is formed on the second plate (52) and the driver (53) is formed as a ring disk (531) enclosing the force shaft (41) having at least one tooth (532) extending radially outward, which bears on the stop (522) in an angular position of the pivot fitting corresponding to the adjustment angle (β).

9. The pivot fitting according to any one of preceding Claims 3 to 7, **characterized in that** at least one stop (512') is formed on the first plate (51') and the driver (53) is formed as a ring disk (531) enclosing the force shaft (41) having at least one tooth (532) extending radially outward, which bears on the stop (512') in an angular position of the pivot fitting corresponding to the adjustment angle (β).

10. The pivot fitting according to any one of preceding Claims 2 and 5 to 8, **characterized in that** at least one anchoring web (512), which is inserted into an anchoring receptacle (23) of the first lever (2), for the rotationally-fixed fixing of the first plate (51) on the first lever (2) is formed on the first plate (51).

11. The pivot fitting according to any one of preceding Claims 3 to 7 and 9, **characterized in that** at least one anchoring web (522'), which is inserted into an anchoring receptacle (23) of the first lever (2), for the rotationally-fixed fixing of the second plate (52) on the first lever (2) is formed on the second plate (52).

12. The pivot fitting according to any one of preceding Claims 3 to 7, 9, and 11, **characterized in that** the second plate (52) is formed as a cover covering the first plate (51).

13. The pivot fitting according to any one of preceding Claims 3 to 7, 9, 11, and 12, **characterized in that** the second plate (52) comprises a driver arm (525') having a driver pin (526') for the rotationally-fixed fixing of the second plate (52) on the first lever (2).

14. The pivot fitting according to any one of preceding Claims 2 to 12, **characterized in that** the damping unit (5) comprises a central bolt (55), using which the damping unit (5) is fixed on the first lever (2) and/or on the second lever (3) axially in relation to the pivot axis (D).

15. The pivot fitting according to any one of preceding Claims 2 to 13, **characterized in that** at least the plates (51, 52, 51', 52') are formed as plastic components or steel components.

16. A piece of furniture (100) having a pivot fitting (1) according to any one of the preceding claims.

17. The piece of furniture (100) according to Claim 16, **characterized in that** the pivot fitting (1) adjustably fixes an armrest (103) or other adjustable furniture parts on a furniture body (101) of a piece of furniture (100) designed as a piece of upholstered furniture, seating furniture, or reclining furniture.

## Revendications

1. Ferrure pivotante (1) notamment pour des éléments mobiles de meuble comprenant :
- un premier levier (2) et un second levier (3) qui peuvent être pivotés l'un par rapport à l'autre d'un angle prédéfini (α) autour d'un axe de pivotement (D) à partir d'une position de base, dans une direction de réglage (V) et dans une direction de retour (R),
- un mécanisme d'accrochage (4) pour accrocher les deux leviers (2, 3) dans des positions angulaires différentes à l'intérieur de l'angle prédéfini (α), l'un par rapport à l'autre contre une force agissant dans la direction de retour (R) et lorsque le mécanisme d'accrochage (4) est neutralisé, en direction de retour (R),
- un arbre d'entraînement (41) du mécanisme d'accrochage (4) couplé solidairement en rotation au second levier (3),
- le mécanisme d'accrochage (4) étant neutralisé par basculement du second levier (3) par rapport au premier levier (2) dans la direction de réglage (V) lorsqu'on arrive dans une position de commutation,
ferrure **caractérisée en ce que**
- le premier levier (2) comporte une unité d'amortissement (5) pour amortir le mouvement de pivotement du second levier (3) par rapport au premier levier (2) dans la direction de réglage (V) à partir d'un angle de réglage (β), prédéfini,
- l'unité d'amortisseur (5) est installée de façon qu'à partir de l'angle de réglage prédéfini (β) elle augmente la force de réglage nécessaire par rapport à la force de réglage nécessaire en amont de l'angle de réglage (β) prédéfini.

2. Ferrure pivotante selon la revendication 1,
**caractérisée en ce que**
l'unité d'amortisseur (5) comprend un premier plateau (51) fixé solidairement en rotation à une tête de levier (22) du premier levier (2), un second plateau (52) s'appuyant sur le premier plateau (51) et tournant par rapport au premier plateau (51) autour de l'axe de pivotement (D), et au moins un élément amortisseur (54) entre les plateaux (51, 52), et couplé aux deux plateaux (51, 52) et s'opposant au mouvement de rotation du second plateau (52) par rapport au premier plateau (51) dans la direction de réglage (V).

3. Ferrure pivotante selon la revendication 1,
**caractérisée en ce que**
l'unité d'amortisseur (5) comporte un premier plateau (51') monté à rotation sur une tête (22) du premier levier (2) autour de l'axe de pivotement (D), un second plateau (52') fixé solidairement en rotation au premier levier (2) et s'appuyant sur le premier plateau (51') ainsi qu'au moins un élément amortisseur (54) entre les deux plateaux (51', 52'), et couplé aux deux plateaux (51', 52') et s'opposant au mouvement de rotation du second plateau (52') par rapport au premier plateau (51') dans la direction de réglage (V).

4. Ferrure pivotante selon la revendication 2 ou 3,
**caractérisée en ce que**
l'unité d'amortisseur (5) comprend un organe d'entraînement (53) pouvant tourner par rapport au plateau rotatif (51') d'un angle de réglage prédéfini (β) en étant solidaire en rotation à l'arbre d'entraînement (41).

5. Ferrure pivotante selon l'une des revendications précédentes 2 à 4,
**caractérisée en ce que**
les plateaux (51, 52, 51', 52') ont au moins une cavité réceptrice (513, 523, 513', 523') pour recevoir solidairement en rotation au moins un élément amortisseur (54) de forme correspondante, cet élément amortisseur (54) étant installé de façon à s'opposer à une rotation des plateaux (51, 52, 51', 52') l'un par rapport à l'autre dans la direction de réglage (V) au-delà de l'angle de réglage (β) prédéfini, en produisant une force qui s'oppose à la rotation par au moins un élément amortisseur (54).

6. Ferrure pivotante selon la revendication 5,
**caractérisée en ce que**
chaque plateau (51, 52, 51', 52') comporte au moins une cavité réceptrice (513, 523, 513', 523') en forme de demi-coquille, et dans les positions angulaires de la ferrure pivotante (1), entre une position de départ et l'angle de réglage prédéfini (β) les demi-coquilles des plateaux (51, 52, 51', 52') étant axialement l'une au-dessus de l'autre forment un logement pour l'élément amortisseur (54) qui, diminue par pivotement de la ferrure pivotante (1) dans la direction de réglage (V), à partir des positions correspondant à l'angle de réglage (β) prédéfini, en direction de la position de commutation de la ferrure pivotante (1) par le coulissement relatif de la cavité réceptrice (523, 523') du second plateau (52, 52') par rapport à la cavité réceptrice (513, 513') du premier plateau (51, 51').

7. Ferrure pivotante selon l'une des revendications précédentes 2 à 6,
**caractérisée en ce que**
au moins un élément amortisseur (54) est réalisé comme ressort, notamment comme ressort hélicoïdal.

8. Ferrure pivotante selon l'une des revendications précédentes 2 et 4 à 7,
**caractérisée en ce que**
au moins une butée (522) est formée sur le second plateau (52) et l'organe d'entraînement (53) est réalisé comme rondelle (531) entourant l'arbre d'entraînement (41) et ayant au moins une dent (532) en saillie radialement vers l'extérieur et s'appuyant contre la butée (522) dans une position angulaire de la ferrure de pivotement correspondant à l'angle de réglage (β).

9. Ferrure pivotante selon l'une des revendications précédentes 3 à 7,
**caractérisée en ce que**
au moins une butée (512') est formée sur le premier plateau (51') et l'organe d'entraînement (53) est une rondelle annulaire (531) entourant l'arbre d'entraînement (41) et ayant au moins une dent (532) radialement en saillie, et venant contre la butée (512') dans une position angulaire de la ferrure de pivotement correspondant à l'angle de réglage (β).

10. Ferrure pivotante selon l'une des revendications précédentes 2 et 5-8,
**caractérisée en ce que**
le premier plateau (51) comporte une entretoise d'accrochage (512) venant dans un logement d'accrochage (23) du premier levier (2) pour fixer le premier plateau (51) solidairement en rotation au premier levier (2).

11. Ferrure pivotante selon l'une des revendications précédentes 3 à 7 et 9,
**caractérisée en ce que**
le second plateau (52) comporte au moins une dent d'accrochage (522') logée dans un logement d'accrochage (23) du premier levier (2) pour fixer solidairement en rotation le second plateau (52) au premier levier (2).

12. Ferrure pivotante selon l'une des revendications précédentes 3 à 7 et 9 et 11,
**caractérisée en ce que**
le second plateau (52) est réalisé comme couvercle, couvrant le premier plateau (51).

13. Ferrure pivotante selon l'une des revendications précédentes 3 à 7, 9, 11 et 12,
**caractérisée en ce que**
le second plateau (52) comporte un bras d'entraînement (525') avec un goujon d'entraînement (526') pour fixer solidairement en rotation le second plateau (52) au premier levier (2).

14. Ferrure pivotante selon l'une des revendications précédentes 2 à 12,
**caractérisée en ce que**
l'unité d'amortisseur (5) comporte un axe central (55) qui fixe l'unité d'amortissement (5) au premier levier (2) et/ou au second levier (3), axialement par rapport à l'axe de pivotement (D).

15. Ferrure pivotante selon l'une des revendications précédentes 2 à 13,
**caractérisée en ce que**
au moins les plateaux (51, 52, 51', 52') sont réalisés comme pièces en matière plastique ou pièces en acier.

16. Meuble (100) équipé d'une ferrure pivotante (1) selon l'une des revendications précédentes.

17. Meuble (100) selon la revendication 16,
**caractérisé en ce que**
la ferrure pivotante (1) permet de fixer de manière réglable un accoudoir (103) ou autre élément réglable de meuble sur le corps (101) d'un meuble (100) tel qu'un meuble rembourré, un siège ou un meuble de couchage.
